# EUROPEAN PATENT APPLICATION

(11) **EP 4 850 833 A1**
(43) Date of publication of application: **09.12.2026**
(21) Application number: 26180745.7
(22) Date of filing: 22.05.2026
(51) Int. Cl.: B22F 3/15, B22F 7/06, B22F 10/14, B22F 10/18, B22F 10/25, B22F 10/28, B22F 10/64, B23K 26/342, B33Y 10/00, B33Y 40/20, B22F 5/00, B22F 5/04, B22F 10/34, B33Y 40/10, B33Y 80/00, C22C 1/059, F01D 5/00

(54) **METHOD FOR MANUFACTURING COMPONENTS USING AN ADDITIVELY MANUFACTURED SHELL AND A POWDER METALLURGY CORE**

(30) Priority: 04.06.2025 US 202563817446 P; 17.09.2025 US 202519331191
(71) Applicant: The Boeing Company, Arlington, VA 22202 (US)
(72) Inventor: YOUSEFIANI, Ali, Tustin (US); CUMMINGS, Scott, Long Beach (US); ZAMORANO SENDEROS, Bruno, Huntsville (US)
(74) Representative: Plasseraud IP

(57) **Abstract**

A method for manufacturing a component includes: fabricating a shell from a first alloy using an additive manufacturing process; filling the shell with a second alloy in powder form; sealing the filled shell; hot isostatically pressing the sealed shell to densify the second alloy and diffusion bond the second alloy to the first alloy to form a consolidated component; and performing post-processing operations on the consolidated component to form a final component. The shell remains as a structural portion of the final component.

## Description

### PRIORITY

This application claims priority from U.S. Ser. No. 63/817,446 filed on June 4, 2025, the entire contents of which are incorporated herein by reference.

### FIELD

The present application relates to the field of powder metallurgy. More particularly, it relates to methods for producing consolidated metallic components using an additively manufactured shell and a powder-filled core, with consolidation achieved through hot isostatic pressing.

### BACKGROUND

Hot isostatic pressing (HIP) is a well-established method for consolidating metal powders into dense, near-net-shape components. In conventional HIP processing, a metal canister or capsule is fabricated from sheet material and used to contain the powder feedstock. The capsule may be filled with powder, sealed-often under vacuum or inert atmosphere-and subjected to elevated temperature and isostatic gas pressure within a HIP vessel. Under these conditions, the powder densifies and fuses into a monolithic structure.

Traditionally, the capsule serves only as a temporary enclosure and is removed after consolidation by machining, chemical etching, or mechanical means. This adds complexity, extends processing time, and generates material waste, particularly when the capsule is made from costly or difficult-to-machine alloys.

Furthermore, conventional HIP capsules are generally fabricated from simple, formed sheet metal and are not geometrically tailored to the final component. As a result, the consolidated part may require significant post-HIP machining or forming to achieve its final shape and tolerances. This need for extensive secondary processing can diminish the cost and efficiency benefits of HIP and introduce additional challenges such as distortion, material loss, and residual stress.

Accordingly, there remains a need for HIP-based manufacturing methods that eliminate unnecessary post-processing, reduce waste, and enable efficient production of structurally integrated, geometrically precise components.

### SUMMARY

In one embodiment, the present description relates to a method for manufacturing a component.

An example method includes fabricating a shell from a first alloy using an additive manufacturing process, filling the shell with a second alloy in powder form, sealing the filled shell, hot isostatically pressing the sealed shell to densify the second alloy and diffusion bond the second alloy to the first alloy to form a consolidated component, and performing post-processing operations on the consolidated component to form a final component. The shell remains as a structural portion of the final component.

The method may further comprise pre-processing the second alloy by powder mixing, mechanical milling, or ultrasonic particulate coating. The mechanical milling may be selected from tumbler ball milling, vibratory ball milling, attrition milling, or rod milling. The filling the shell with the second alloy may be performed under an inert gas atmosphere. The sealing the filled shell comprises mechanical crimping, welding, or both. The sealing the filled shell may comprise mechanical crimping, welding, or both. The welding may be selected from tungsten inert gas welding, laser welding, or solid-state welding. The hot isostatic pressing may be conducted at a pressure between 10 ksi and 30 ksi and a temperature between 0.5 Tm and 0.9 Tm. The hot isostatic pressing duration may be between 1 hour and 100 hours. The consolidated component may be cooled by natural convection or forced convection cooling. The method may further comprise performing post-processing on the consolidated component to form a final component. The post-processing may comprise heat treating, net-shape machining, near-net-shape forming, or bulk forming. The post-processing may further comprise thermo-mechanical processing selected from closed die forging, rotary forging, cogging, or multi-axis compression.

Another example method includes fabricating a shell from a first alloy using a powder bed fusion additive manufacturing process, applying a barrier coating to an interior surface of the shell, filling the shell with a second alloy in powder form, sealing the filled shell, hot isostatically pressing the sealed shell to densify the powder and diffusion bond the second alloy to the first alloy to form a consolidated component, and performing post-processing operations on the consolidated component to form a final thruster component. The shell remains as a structural portion of the final component.

The first alloy may comprise platinum and rhodium. The first alloy may comprise platinum with 10 weight percent rhodium. The second alloy may comprise niobium, tungsten, and zirconium. The second alloy may comprise niobium with 10 weight percent tungsten and 2.5 weight percent zirconium. The barrier coating may comprise iridium. The barrier coating may be applied by chemical vapor deposition. The shell and the second alloy may both comprise powder having a spherical particle morphology with a particle size distribution between 15 micrometers and 63 micrometers. The shell may be filled with the second alloy in an argon environment and compacted using a vibratory table. The method may further comprise vacuum degassing the filled shell prior to sealing, at a temperature corresponding to approximately 0.3 Tm and a pressure of approximately 10⁻⁶ torr. The sealing may comprise crimping and tungsten inert gas welding. The hot isostatic pressing may be performed at approximately 1500°C, 20 ksi, and for a duration of approximately three hours. The post-processing may comprise heat treatment and final machining to engineering drawing tolerances. The component may be a thruster component.

Other embodiments of the disclosed methods will become apparent from the following detailed description, the accompanying drawings and the appended claims.

### BRIEF DESCRIPTION OF THE DRAWINGS

FIG. 1 is a flow diagram showing an example method for manufacturing a component using an additively manufactured shell, a powder-filled core, and hot isostatic pressing.
FIG. 2A is a cross-sectional view of an example shell fabricated from a first alloy using additive manufacturing.
FIG. 2B shows the example shell of FIG. 2A after being filled with a powder core.
FIG. 2C shows the example component of FIGS. 2A and 2B after hot isostatic pressing, with a solid core bonded to the shell.
FIG. 3 is a schematic cross-section of an example component at successive stages: shell fabrication, powder filling, and final consolidation.
FIG. 4 is a cross-sectional view of an example consolidated component with a complex geometry.
FIG. 5A is a cross-sectional view of an example additively manufactured shell designed and fabricated to define the component's final geometry.
FIG. 5B shows the example shell of FIG. 5A after application of an internal barrier coating via chemical vapor deposition.
FIG. 5C shows the example shell of FIG. 5B after being filled with core powder under inert conditions.
FIG. 5D illustrates the example filled shell undergoing vacuum degassing to remove moisture and gas constituents.
FIG. 5E shows the example powder-filled shell after being hermetically sealed by crimping and welding.
FIG. 5F is a cross-sectional view of the example component after hot isostatic pressing, showing a consolidated core bonded to the shell.
FIG. 5G shows the example post-HIP component after final machining to achieve dimensional tolerances.
FIG. 5H is a cross-sectional view of the example final consolidated component, illustrating the bonded shell-core structure.

### DETAILED DESCRIPTION

A method is provided for manufacturing a consolidated, multi-material component in which a structural shell is fabricated using an additive manufacturing (AM) process and subsequently filled with a powder core material. The method comprises: fabricating a shell from a first alloy using an additive manufacturing process; filling the shell with a second alloy in powder form; sealing the filled shell; hot isostatically pressing the sealed shell to densify the second alloy and diffusion bond the second alloy to the first alloy to form a consolidated component; and performing post-processing operations on the consolidated component to form a final component. The shell remains as a structural portion of the final component can serve as a load-bearing or functional outer layer. This approach enables the integration of high-performance shell materials with controlled or cost-effective core materials and avoids the need for post-HIP capsule removal or external bonding steps.

The method can begin with the design of a component tailored to application-specific functional and environmental requirements. Materials for both the shell and the powder core can be selected based on performance targets such as thermal resistance, mechanical strength, corrosion resistance, or cost constraints. For example, the shell material may be chosen for its ability to withstand elevated temperatures or oxidation, while the powder core may be controlled for mass efficiency, toughness, or thermal conductivity. The component geometry may be developed using computer-aided design (CAD) tools and may incorporate complex or conformal features enabled by additive manufacturing. Finite element analysis (FEA) or other simulation techniques may be used to model stress distribution, thermal gradients, or powder compaction behavior under hot isostatic pressing (HIP) conditions to refine the shell design prior to fabrication.

The shell is fabricated from a first alloy using an additive manufacturing process that can enable near-net-shape production and accommodate complex geometries. Following fabrication, the shell may be heat treated to relieve residual stress or modify microstructure, and surface engineering steps may be applied, such as deposition of barrier or compatibility coatings via chemical vapor deposition (CVD), physical vapor deposition (PVD), or slurry coating. Finish machining may be performed to meet dimensional tolerances or to prepare sealing interfaces.

Once the shell is fabricated and prepared, it is filled with a second alloy in powder form. The core powder may be compositionally similar to or different from the shell alloy. The powder may undergo pre-processing steps such as mixing, blending, mechanical milling (e.g., ball milling, attrition milling), ultrasonic particulate coating, and classification into a desired particle size distribution (PSD). These steps ensure flowability, homogeneity, and packing efficiency. The powder may be introduced into the shell in an ambient or inert gas environment, such as argon, and may be compacted using vibration or tamping to control fill density and minimize entrapped gas.

After powder fill, the shell is sealed to allow for successful HIP consolidation. The sealing process may involve mechanical crimping, performed at room or elevated temperature, followed by one or more welding operations. In certain embodiments, a vacuum degassing step is performed prior to sealing to remove adsorbed gases, moisture, or volatile contaminants. Proper degassing and sealing can be important to ensuring the quality of the HIP process and the integrity of the final component.

The sealed shell is subjected to hot isostatic pressing, wherein the component is exposed to elevated temperature and isostatic gas pressure for a duration sufficient to achieve full densification of the powder and diffusion bonding to the shell. The HIP process parameters may vary depending on the material system. The sealed environment created by the shell enables uniform pressure application, even in complex geometries. During HIP, the powder core consolidates into a fully dense mass, and a metallurgical bond forms at the shell-core interface, resulting in a monolithic, multi-material structure without internal voids or weld seams.

Following HIP, the consolidated component undergoes post-processing to meet final specifications for geometry, surface finish, and mechanical properties. Post-processing operations may include heat treatment, performed in air or vacuum furnaces, to modify microstructure or relieve internal stresses. Net-shape or near-net-shape machining may be used to achieve final dimensional tolerances. Additional forming processes, such as finish forging, hot forming, or creep forming, may be applied to refine external geometry. In some cases, bulk forming via thermomechanical processing (TMP) such as closed die forging, rotary forging, cogging, or multi-axis compression may be used to further tailor the properties of the consolidated structure. The shell remains as a structural portion of the final component, providing functional benefits such as load-bearing capacity, oxidation resistance, wear protection, or thermal shielding, depending on the intended application.

### DESIGN OF COMPONENT

The design phase begins with identifying the performance requirements for the finished component. These requirements may include mechanical loading conditions, thermal gradients, chemical exposure, weight constraints, dimensional tolerances, and cost targets. Based on these factors, the designer selects appropriate materials, geometric features, and processing strategies for both the outer shell and the powder core, aiming to control performance while minimizing material usage and post-processing requirements. The design may also consider compatibility with additive manufacturing (AM), hot isostatic pressing (HIP), and any post-HIP processing operations.

### Materials Selection Based on Application Requirements (Shell and Core)

Material selection is dictated by the distinct functional roles of the shell and the core. The shell, which remains in the final component as a structural and potentially functional surface, may be selected to withstand the mechanical, thermal, and chemical conditions encountered during HIP and in-service use. Depending on the application, the shell material may require high-temperature strength, creep resistance, fatigue resistance, oxidation or corrosion resistance, or thermal conductivity. Materials suitable for shell fabrication include, but are not limited to, nickel-based superalloys, cobalt-based alloys, titanium alloys, refractory metal alloys (e.g., molybdenum, niobium, tungsten, and their alloys), and stainless steels.

The powder core material is selected to provide the desired bulk properties of the component and may be controlled for strength, ductility, stiffness, weight reduction, thermal management, or cost savings. The second alloy may be compositionally similar to the shell to promote diffusion bonding or may be dissimilar to tailor specific functionality such as stress distribution, thermal insulation, or mass efficiency.

The shell and the core may also include enhancement particulates such as oxides (e.g., yttria, alumina, zirconia), nitrides (e.g., TiN, BN), borides (e.g., TiB₂), or carbides (e.g., SiC, TiC) to improve wear resistance, creep strength, thermal conductivity, or to inhibit grain growth. Shell and core materials are selected to be metallurgically compatible under HIP conditions to enable strong bonding and to avoid the formation of brittle phases or residual stress due to thermal expansion mismatch.

### Computer-Aided Design (CAD)

Component geometry is developed using computer-aided design (CAD) software that enables full three-dimensional modeling of both the outer shell and internal fill volume. The geometry may incorporate complex or conformal features that take advantage of additive manufacturing capabilities, such as integrated channels, variable wall thickness, or lattice structures. The shell geometry is configured to serve multiple purposes: to define the final shape of the component, to contain the powder during HIP, to provide pressure resistance, and to incorporate features necessary for sealing, handling, or post-processing. CAD models may also include auxiliary features such as fill ports, degas tubes, or datum references. The shell may be designed to approximate a near-net shape of the final component, minimizing the need for extensive machining after HIP consolidation.

### FEA / Simulation

Simulation tools such as finite element analysis (FEA), computational fluid dynamics (CFD), or process modeling software may be used to predict and control component behavior during manufacturing and in-service conditions. These simulations may assess powder compaction behavior under HIP pressure and temperature, thermal expansion or distortion of the shell, residual stress development, and the effectiveness of interfacial bonding between the shell and core. Simulations may also inform decisions on material selection, wall thickness, reinforcement features, and thermal barrier integration. In some cases, simulation outputs may be directly fed back into the CAD model to refine part geometry or control HIP cycle parameters. This design-simulation feedback loop helps ensure that the component can be successfully manufactured and will meet functional requirements in service.

### FEEDSTOCK COMPOSITIONAL STATE FOR SHELL

The feedstock used to fabricate the shell is selected to deliver the mechanical strength, thermal stability, and chemical resistance required both during processing-particularly during hot isostatic pressing (HIP)-and in the final operating environment of the component. In some examples, the feedstock may also be compatible with the selected additive manufacturing (AM) method and capable of producing dense, defect-free features upon consolidation. The compositional state of the shell feedstock can vary depending on the alloy system, manufacturing constraints, and desired functional properties.

### Composition

The shell material may be selected from a wide range of metallic systems that offer high-temperature strength, corrosion or oxidation resistance, creep resistance, and other desired properties. Suitable alloy families include nickel-based superalloys, cobalt-based alloys, titanium-based alloys, refractory metal alloys (e.g., those based on molybdenum, tungsten, tantalum, or niobium), stainless steels, and precious metal-based alloys such as platinum-rhodium or iridium alloys. Selection of the alloy system is influenced by both service conditions and the material's printability within the constraints of the chosen AM process.

### Pre-Alloyed Feedstock

In some embodiments, the feedstock is provided as pre-alloyed powder, where the complete chemical composition is established during primary melting and powder production, such as gas or plasma atomization. Pre-alloyed powders provide tight control over composition and solidification structure and are especially well-suited to additive processes such as powder bed fusion (PBF), directed energy deposition (DED), or binder jetting. This format simplifies material certification, provides consistency across builds, and facilitates process modeling based on known alloy behavior.

### Blended Elemental Feedstock

In other embodiments, the feedstock may comprise a blend of elemental powders, which may alloy in situ during the AM process or through a post-build heat treatment or HIP cycle. Blended elemental feedstocks may be advantageous where specific alloy formulations are not readily available in pre-alloyed form, or where flexibility in tailoring composition is required. This approach can also enable cost savings by using commodity elemental powders and allows for incorporation of non-standard compositions, including transitional or compositionally graded regions.

### Inclusion of Enhancement Particulates

To further tailor the microstructure or properties of the shell material, enhancement particulates may be added to either pre-alloyed or blended elemental feedstock. These particulates may remain as distinct phases within the matrix or may partially dissolve depending on thermal exposure during AM, heat treatment, and HIP. Such additions can be used to improve creep resistance, oxidation performance, hardness, thermal conductivity, or resistance to grain growth.

### Oxide-Based Enhancement Particulates

Oxide particulates may include yttria (Y₂O₃), alumina (Al₂O₃), zirconia (ZrO₂), and hafnia (HfO₂). These oxides may enhance high-temperature performance by providing thermal stability, oxidation resistance, or dispersion strengthening. In some cases, they may function analogously to oxide dispersion strengthened (ODS) systems.

### Nitride-Based Enhancement Particulates

Nitrides such as titanium nitride (TiN), zirconium nitride (ZrN), and boron nitride (BN) may be included to improve wear resistance, thermal conductivity, or chemical inertness. These materials are often stable at elevated temperatures and may also contribute to microstructural refinement.

### Boride-Based Enhancement Particulates

Titanium diboride (TiB₂) and zirconium diboride (ZrB₂) may be added to increase surface hardness, thermal resistance, or oxidation stability. These particulates may also serve as nucleation sites during solidification, thereby refining grain size and improving mechanical uniformity.

### Carbide-Based Enhancement Particulates

Carbide reinforcements such as titanium carbide (TiC), zirconium carbide (ZrC), and silicon carbide (SiC) may be employed to enhance erosion resistance, maintain structural rigidity at elevated temperatures, and improve overall toughness. Carbides are often used in harsh environments where wear or impact resistance is desired.

### Other or Complex Enhancement Particulates

Additional complex reinforcements may include intermetallic compounds (e.g., Ni₃Al, TiAl) or engineered multi-phase particles. In some embodiments, such complex particulates are tailored for site-specific performance or may be used in graded compositions within the shell structure.

### FEEDSTOCK MORPHOLOGY FOR SHELL

The morphology of the feedstock used for shell fabrication is selected based on the requirements of the additive manufacturing (AM) process, the alloy system, and the desired physical and mechanical characteristics of the final component. Feedstock morphology influences flowability, powder layer uniformity, packing density, melt pool behavior, and ultimately, the density and surface quality of the as-fabricated shell. Morphology selection also affects process stability and repeatability, particularly in powder-based AM methods.

### Powder Feedstock for Shell

Powder-based feedstocks may include a range of particle shapes and size distributions, which are chosen based on process demands and material properties. Morphologies may include:

Spherical powders, which may be produced via gas or plasma atomization, are favored for processes such as laser powder bed fusion (LPBF), electron beam melting (EBM), and other powder bed-based AM systems. Spherical powders exhibit excellent flowability, uniform layer spreading, and predictable melting behavior, which promotes high part density, smooth surface finish, and tight dimensional control.

Spheroidal or near-spherical powders offer an intermediate morphology, often at lower cost than fully spherical atomized powders. These are suitable for certain binder jetting or DED processes where slightly reduced flowability can be tolerated.

Granular or irregular powders, which may be produced by mechanical crushing, hydride-dehydride processing, or other techniques, may be used in AM methods where powder spreading is less important. These include binder jetting, cold spray, or certain hybrid AM methods. While more economical, irregular powders can lead to reduced packing density, increased porosity, or inconsistent melt behavior in processes requiring localized energy input.

Particle size distribution (PSD) is also an important factor. Finer particles may enhance surface finish and resolution but may increase risk of oxidation and agglomeration. Coarser particles improve flow and may be advantageous for thicker layers or high-deposition processes. In some cases, bimodal or engineered PSDs may be used to control packing and minimize porosity.

### Solid Feedstock for Shell

Some additive manufacturing methods utilize solid feedstock in the form of wire. Wire-based feedstocks may be used in directed energy deposition (DED) systems and in solid-state processes such as friction stir deposition (FSD). These systems achieve material buildup by melting or plastic deformation of the wire, which may occur under the influence of a localized heat source or mechanical stirring.

The morphology of wire feedstock is defined by its diameter, surface finish, and compositional uniformity. Wire diameter is selected based on deposition rate, resolution requirements, and system compatibility. Larger diameter wire may enable higher build rates, while smaller diameters provide better control for finer features. Surface oxidation or contamination of wire feedstock can adversely affect deposition quality, bonding, and final part properties, and may be mitigated through surface preparation or use of inert atmospheres.

Wire feedstock offers benefits including reduced contamination risk, higher material utilization efficiency, and simplified handling relative to powders. However, it may be limited in terms of alloy availability and geometric complexity compared to powder-based methods.

### FABRICATION METHODS FOR SHELL

The shell may be fabricated using a range of additive manufacturing (AM) techniques, selected based on the alloy system, geometric complexity, surface finish requirements, thermal processing constraints, and production throughput objectives. The method of shell fabrication may be tailored to achieve a near-net-shape external geometry, to enable integration with a specific powder core, and to ensure compatibility with subsequent processing steps such as sealing and hot isostatic pressing (HIP).

### Binder Jetting

Binder jetting is a powder-based AM process that uses a liquid binder selectively deposited onto a bed of powder to form a "green" part layer by layer. Following printing, the green body may undergo debinding and sintering to develop mechanical integrity. In some cases, infiltration with a secondary metal may be used to increase density or modify surface properties. Binder jetting offers high build speeds and large build volumes, making it suitable for fabricating shells with complex external geometries or internal cavities. It is particularly useful for brittle or hard-to-weld materials that benefit from low thermal gradients during part formation. Surface finish and dimensional accuracy may be refined through post-sintering machining or polishing.

### Directed Energy Deposition (DED)

DED encompasses a family of AM processes in which powder or wire feedstock is introduced into a focused heat source, such as a laser, electron beam, or plasma arc. The material melts upon contact with the heat source and solidifies on the build surface, forming a deposited track. Powder-based DED allows for in-situ alloying, gradient material transitions, and local reinforcement by varying feedstock composition in real time. Wire-based DED offers high deposition rates and is well suited for large parts or repairs. DED is often used where high material utilization, robust metallurgical bonding, and controlled microstructures are required. Shells produced using DED may require additional machining to meet dimensional tolerances or surface quality specifications.

### Fused Filament Fabrication (FFF)

FFF for metals involves extrusion of a filament composed of a metal powder suspended in a polymer binder. Layers are deposited sequentially to form a green part, which is subsequently subjected to debinding and sintering to produce a consolidated metal structure. This process enables low-cost, benchtop manufacturing of complex shell geometries and is compatible with a variety of alloy systems. FFF is well suited for moderate complexity components where strength, dimensional fidelity, and material density can be achieved through controlled sintering and post-processing. Shells fabricated via FFF may benefit from design features such as lattice walls or infill patterns to balance weight and strength.

### Powder Bed Fusion (PBF)

PBF includes both laser powder bed fusion (LPBF) and electron beam melting (EBM), which use focused energy sources to selectively melt and solidify fine layers of metal powder. LPBF offers high resolution, excellent surface finish, and material density approaching that of wrought materials. It is compatible with a wide range of alloys, including nickel superalloys, titanium alloys, and refractory metals. EBM operates in a vacuum environment and is well suited for reactive or high-temperature alloys. PBF enables fabrication of thin-walled shells, conformal features, and complex geometries with integrated internal structures. Due to its precision and repeatability, PBF is often used for components where shell dimensional accuracy and mechanical integrity are paramount.

### Friction Stir Deposition (FSD)

Friction stir deposition is a solid-state AM process in which feedstock, which may be wire or rod, is plastically deformed and deposited through a rotating tool that generates localized frictional heat. Unlike fusion-based methods, FSD does not melt the material, resulting in low residual stress, refined grain structure, and improved mechanical properties. FSD is advantageous for difficult-to-weld materials and for components requiring high toughness or fatigue resistance. Shells produced using FSD may exhibit excellent bonding, and the process is tolerant of variations in feedstock or environmental conditions.

### Cold Spray

Cold spray is a solid-state process in which metallic powders are accelerated to supersonic velocities using a high-pressure gas jet and deposited onto a substrate through plastic deformation. The process occurs below the melting temperature of the feedstock, avoiding oxidation and phase transformation. Cold spray is well suited for oxidation-sensitive materials, such as copper, aluminum, titanium, and certain reactive alloys. Shells fabricated by cold spray may be built up on mandrels, forms, or substrates and later extracted or machined to final geometry. The process enables high deposition rates and can be adapted to fabricate dense, ductile shells with controlled wall thickness and minimal heat-affected zones.

### SHELL PREPARATION

Following additive manufacturing, the shell may undergo one or more post-fabrication treatments to refine its microstructure, improve dimensional accuracy, enhance surface properties, and ensure compatibility with subsequent processing steps. These operations are selected based on the material system, fabrication method, and the requirements of the hot isostatic pressing (HIP) process and final component performance. Shell preparation may include heat treatment, surface engineering of both interior and exterior surfaces, and final machining or dimensional adjustments.

### Heat Treatment of Shell

Heat treatment may be performed to relieve residual stresses generated during additive manufacturing, to homogenize the as-deposited microstructure, or to control phase distribution and mechanical properties of the shell material. The specific temperature, atmosphere, and duration of heat treatment are selected based on the alloy system and desired material characteristics. For example, nickel-based superalloys or refractory metals may be heat treated in vacuum furnaces to prevent oxidation or contamination, while stainless steels may be processed in ambient or controlled atmospheres. Heat treatment may also be used to improve dimensional stability and shell rigidity, which can be important during subsequent powder filling and HIP consolidation.

### Surface Engineering

The inner and outer surfaces of the shell may be modified to improve compatibility with the powder core and to enhance post-HIP performance. Surface engineering treatments may involve the application of coatings, surface hardening, oxidation protection, or functional modifications to tailor the chemical and mechanical interface between the shell and the powder core or to prepare the outer surface for service-specific conditions.

### Inner Surface Barrier Coating

An inner surface barrier coating may be applied to prevent interdiffusion between the shell and the powder core during HIP. Such coatings serve as diffusion barriers or chemical isolators and are particularly beneficial when the core and shell are compositionally dissimilar or when reactive powder elements are present. These coatings may be applied using chemical vapor deposition (CVD), physical vapor deposition (PVD), slurry coating, or other advanced thin-film techniques. Materials used for barrier coatings may include iridium, refractory oxides, or inert ceramic layers, depending on temperature and compatibility requirements. Barrier coatings may also help preserve core composition and microstructure during consolidation.

### Inner Surface Compatibility Coating

In some embodiments, a compatibility coating may be applied to the interior shell surface to promote metallurgical bonding during HIP. These coatings may function as bonding promoters, diffusion enhancers, or interfacial buffers, and may be particularly useful when joining alloys with differing thermal expansion coefficients or limited mutual solubility. Like barrier coatings, compatibility layers may be deposited using CVD, PVD, slurry-based techniques, or other physical or chemical methods. The coating composition may be tailored to gradually transition between the chemistries of the shell and the core, thereby reducing the risk of brittle phase formation or residual stress.

### Outer Surface Modifications

The outer surface of the shell may also be engineered to improve service performance or prepare the shell for post-HIP operations. Surface modifications may include coatings for oxidation, corrosion, or wear resistance, such as aluminide or chromia-forming layers. Mechanical surface treatments such as shot peening, laser peening, or surface rolling may be used to introduce beneficial compressive stress, refine grain structure, or improve fatigue life. In some cases, temporary surface treatments may be applied to protect the shell during powder filling or handling and may be removed after consolidation.

### Finish Machining

Finish machining operations may be performed to achieve tight dimensional tolerances, flatness, or geometric features required for powder fill, sealing, or subsequent post-HIP finishing. These operations may include machining of fill ports, closure surfaces, indexing features, external threads, or mounting flats. Precision machining may also be necessary to ensure hermetic sealing of the shell prior to HIP or to ensure uniform wall thickness for predictable consolidation behavior. In certain embodiments, machining is kept minimal by designing the shell geometry to approximate a near-net-shape of the final component, leveraging the precision of the AM process.

### FEEDSTOCK COMPOSITIONAL STATE FOR CORE

The powder core material may be formulated in various compositional states to meet performance objectives during HIP consolidation and in the final component. The core composition is selected to achieve targeted structural, thermal, or functional properties, while also maintaining compatibility with the surrounding shell material during HIP processing.

### Composition

The alloy composition of the core is selected based on application-specific performance requirements, such as strength, ductility, creep resistance, thermal conductivity, mass efficiency, or corrosion resistance. In some embodiments, the core material may be compositionally identical to the shell to facilitate homogeneous consolidation and diffusion bonding. In other embodiments, the core is deliberately different from the shell to enable spatial property tailoring-such as combining a high-strength or oxidation-resistant shell with a lower-cost or high-conductivity core. Selection is also guided by metallurgical compatibility, with particular attention to phase stability, mutual solubility, and thermal expansion mismatch during HIP.

### Pre-Alloyed Powder

Pre-alloyed powders are those in which the complete chemical composition is established prior to additive manufacturing or powder filling, which may occur through gas or plasma atomization of a molten alloy. These powders offer excellent compositional homogeneity, predictable behavior during HIP, and well-characterized metallurgical performance. Pre-alloyed feedstock is often preferred in applications where phase control, grain structure, and diffusion behavior is be tightly regulated. It is also advantageous for maintaining consistent material properties across production batches and for alloys requiring narrow compositional tolerances.

### Blended Elemental Powder

Blended elemental powders may be used as an alternative to pre-alloyed feedstock, particularly where customized compositions or cost savings are desired. In this approach, discrete elemental powders are physically blended and may be alloyed in situ during the HIP process or during pre-processing steps such as heat treatment. Blended powders enable flexible formulation of nonstandard or experimental alloys and allow for compositional gradients or site-specific enhancements. The blends may also incorporate non-metallic particles, such as carbides or oxides, to further tailor core behavior.

### Enhancement Particulates

The core feedstock may include enhancement particulates to modify its mechanical or functional properties. These reinforcements may function as dispersion-strengthening agents, grain refiners, thermal conductors, or barriers to grain boundary sliding or creep. Depending on the HIP conditions and matrix chemistry, particulates may remain as discrete phases or dissolve partially or fully into the matrix to influence phase evolution and material behavior.

### Oxides

Oxide particles such as yttria (Y₂O₃), alumina (Al₂O₃), zirconia (ZrO₂), and hafnia (HfO₂) may be introduced to increase high-temperature strength, stabilize grain boundaries, or function as diffusion barriers. These may be used in oxide dispersion strengthened (ODS) systems and may enhance oxidation resistance or improve long-term microstructural stability during elevated temperature service.

### Nitrides

Nitrides including titanium nitride (TiN), zirconium nitride (ZrN), and boron nitride (BN) offer benefits such as improved wear resistance, hardness, and thermal conductivity. These particles may also serve as recrystallization inhibitors or phase stabilizers during HIP.

### Borides

Boride-based reinforcements, such as titanium diboride (TiB₂) and zirconium diboride (ZrB₂), may be added to enhance strength, hardness, or oxidation resistance, especially in high-temperature environments. These materials may also function as grain refiners or serve as nucleation sites during powder consolidation.

### Carbides

Carbide particulates, such as titanium carbide (TiC), zirconium carbide (ZrC), and silicon carbide (SiC), may be included to improve erosion resistance, surface hardness, or structural stability at elevated temperatures. Carbides are often used where high wear resistance or thermal barrier functionality is required in the core region of the component.

### Other/Complex

In some embodiments, the feedstock may include more advanced or multifunctional particulates such as intermetallic compounds (e.g., NiAl, TiAl), MAX phases (e.g., Ti₃SiC₂, Cr₂AlC), or engineered composite particles, including core-shell or functionally graded particulates. These complex additives may be selected to enhance oxidation resistance, damping behavior, thermal expansion matching, or to induce self-healing effects under cyclic thermal conditions. The inclusion of such particulates allows for highly customized core performance without altering the shell chemistry.

### POWDER FEEDSTOCK MORPHOLOGY FOR CORE

The morphology of the powder feedstock used for the core plays an important role in determining the behavior of the material during filling, compaction, and hot isostatic pressing (HIP). Morphology directly influences flowability, bulk and tap density, compaction uniformity, sintering kinetics, and the degree of densification achievable under HIP conditions. Selection of powder morphology is guided by considerations such as target porosity before HIP, final density requirements, interfacial bonding with the shell, and overall process stability.

Powder morphologies suitable for core fill material include, but are not limited to, granular, spheroidal, spherical, fine, and flake forms. These morphologies may be used individually or in combination to tailor packing characteristics or functional gradients within the core.

### Spherical Powders

Spherical powders, which may be produced through gas atomization or plasma atomization, are generally preferred for their excellent flowability and high packing density. These powders exhibit predictable behavior during powder handling, vibratory filling, and HIP. Spherical morphology allows for uniform compaction, minimizes interparticle friction, and enhances isotropy of the consolidated core. These characteristics make spherical powders particularly advantageous for achieving high final density and consistent microstructure.

### Spheroidal Powders

Spheroidal or near-spherical powders have slightly irregular but generally rounded shapes and may be produced through centrifugal atomization, rotating electrode processes, or mechanical rounding techniques. These powders offer reasonable flow and packing behavior at reduced cost compared to fully spherical powders. Spheroidal powders may be preferred in applications where flowability is required, but extreme precision is not necessary.

### Granular Powders

Granular powders possess irregular or angular morphologies, often resulting from mechanical crushing, hydride-dehydride (HDH) processing, or chemical reduction techniques. These powders tend to have lower flowability and may exhibit non-uniform packing, but can be advantageous in certain fill strategies where mechanical interlocking is desired. Granular powders may also be used in cost-sensitive applications or when aggressive HIP conditions will compensate for packing irregularities.

### Fine Powders

Fine powders, generally defined as having particle sizes below approximately 15-20 micrometers, may be used to enhance sintering kinetics and reduce diffusion distances during HIP. These powders can aid in achieving full densification, particularly in combination with coarser particles in a bimodal or multimodal distribution. However, fine powders are prone to agglomeration, reduced flowability, and increased surface oxidation. As such, their use may require pre-processing steps such as deagglomeration, classification, or surface treatment to ensure uniform filling and consolidation.

### Flake Powders

Flake powders are thin, plate-like particles with high aspect ratios. These may be used in specialized applications to introduce anisotropic thermal or electrical behavior or to promote directional consolidation. Flake morphologies are less common in HIP applications due to poor flow characteristics and limited packing efficiency but may be appropriate in engineered blends or in layered core designs.

### Mixed or Engineered Morphologies

In some embodiments, the core feedstock may include a mixture of different morphologies to control packing density and sintering behavior. For example, a bimodal distribution combining coarse spherical particles with fine powder can fill interstitial voids more effectively and improve green density prior to HIP. Morphology engineering may also support functionally graded materials (FGMs), where the particle size and shape vary across the fill volume to produce spatial variations in mechanical or thermal properties after consolidation.

### PRE-PROCESSING OF POWDER FOR CORE

Prior to filling the shell, the powder feedstock for the core may undergo one or more pre-processing operations to improve flowability, homogeneity, compaction behavior, and final material properties. These operations may include mechanical mixing, compositional blending, milling, particle surface modification, and particle size classification. The goal of these steps is to prepare the core material for efficient loading and densification during hot isostatic pressing (HIP), while maintaining compositional uniformity and microstructural consistency.

### Powder Mixing

Powder mixing may be employed to homogenize one or more powder lots of the same composition, normalize flowability across batches, or reduce compositional gradients introduced during storage or transport. Mixing can be performed using rotating drum mixers, double-cone mixers, or other low-energy techniques that preserve particle morphology. Homogeneous mixing is particularly important for ensuring consistent fill behavior, especially when powder batches are sourced from multiple suppliers or when sensitive alloy compositions are involved.

### Blending and Mixing of Discrete Powders

In many embodiments, the powder feedstock may be produced through compositional blending of two or more discrete powder types. These may include:
Elemental blends, in which elemental metal powders (e.g., Nb, W, Zr) are combined to form a desired alloy composition. These blends may react or homogenize during HIP to create a metallurgically bonded solid solution or multiphase structure.

Pre-alloyed blends, where multiple alloy powders are combined to adjust the final chemistry or to engineer spatial variations in composition or mechanical behavior.

Hybrid blends, which combine elemental powders with enhancement particulates, or pre-alloyed powders with discrete ceramic, intermetallic, or complex particulates to impart additional properties such as wear resistance, thermal conductivity, or creep resistance.

Morphology-engineered blends, which include powders of different shapes or size distributions (e.g., spherical and fine, granular and flake) to control packing density, reduce porosity, or control sintering kinetics.

Blending may be performed under dry or wet conditions, and with or without binders, depending on downstream fill method and sensitivity to segregation.

Milling is used to reduce particle size, deagglomerate soft agglomerates, and promote uniform distribution of alloying elements or reinforcement phases. Milling methods may include:

Tumbler ball milling, which uses rotational energy to grind powder through cascading motion of grinding media. Suitable for general-purpose blending or mild particle size reduction.

Vibratory ball milling, which induces high-frequency vibration to increase impact energy and accelerate powder refinement.

Attrition milling, where powder is agitated in a stirred media chamber, allowing for finer and more controlled particle size reduction, often used in preparing composite or nanostructured powders.

Hammer and rod mills, which may be used for more aggressive size reduction or for breaking apart friable agglomerates.

Milling parameters are selected to balance powder refinement with preservation of flowability and avoidance of excessive contamination or cold welding.

### Ultrasonic Particulate Coating

Ultrasonic processing may be employed to apply nanoscale or microscale coatings to the surface of core powder particles. These coatings may include functional materials such as oxides, carbides, or lubricants, and may be used to improve dispersion, reduce oxidation, promote sintering, or create core-shell particle architectures. Ultrasonic energy enhances uniformity of coating distribution and may help embed fine particulates into the host powder surface without significant thermal exposure. In some embodiments, ultrasonic coating is used to embed diffusion barrier particles or to support engineered gradients across the powder volume.

### Final Particle Size Distribution (PSD)

Following any blending, milling, or coating operations, the final feedstock may be classified to achieve a target particle size distribution (PSD). PSD is selected based on desired packing behavior, flowability, and sinterability, and may be tailored to the geometry of the shell and HIP processing window. PSD ranges may include:
Less than 10 micrometers, often used to enhance sinterability, but may suffer from poor flow and increased oxidation risk.

10 to 60 micrometers, offering a balance of flow and packing for high-density fill applications.

60 to 150 micrometers, suitable for larger shell geometries or where flowability is prioritized over surface area.

150 to 300 micrometers, often used in larger-diameter fill ports or when coarser powders are compatible with the HIP profile.

300 to 600 micrometers and 600 to 1000 micrometers, occasionally used for engineered porosity, functionally graded materials, or in multimodal blends.

Combinations of distributions, including bimodal or trimodal blends, may be used to improve packing efficiency, increase tap density, or control sintering shrinkage.

Classification may be performed using sieving, air classification, or centrifugal separation techniques. In some embodiments, powders are processed in inert or vacuum environments to preserve oxidation-sensitive constituents during classification.

### ASSEMBLY AND PRE-PROCESSING OF COMPONENT (CORE/SHELL)

After separate preparation of the shell and the core powder, the two are brought together during the assembly phase. This step includes introducing the powder fill material into the shell, which may occur under controlled environmental conditions, and preparing the filled shell for sealing and hot isostatic pressing (HIP). Proper assembly and pre-processing are essential to ensure uniform packing, remove trapped gases or volatiles, and achieve controlled densification and interfacial bonding during HIP.

### Powder Fill

The shell is filled with the selected core powder, which may occur through a fill port or open end. In some examples, the fill procedure ensures uniform distribution of powder within the internal cavity of the shell and achieve sufficient packing density to promote full densification during HIP. Various techniques may be used to control powder loading, including gravity feed, vibratory settling, tamping, or mechanical compaction.

Powder fill may be performed in different environmental conditions depending on the sensitivity of the core material:
Ambient Environment: For materials that are not particularly reactive with air or moisture, powder filling may occur under atmospheric conditions. This simplifies equipment requirements but may introduce trace contamination.

Inert Environment: For reactive or oxidation-sensitive powders (e.g., titanium, zirconium, or finely divided alloys), filling is performed under a controlled atmosphere, which may include argon, nitrogen, or helium. Inert environments help preserve powder surface chemistry and prevent oxidation or hydration that could interfere with consolidation or cause gas entrapment during HIP.

In some embodiments, the shell may be vibrated or rotated during filling to improve powder compaction and reduce air pockets. Multiple fill and settle cycles may be used to maximize bulk density, especially in complex geometries or narrow cavities.

### Degassing

Once filled, the component may undergo degassing to remove entrapped gases, absorbed moisture, or volatile contaminants from both the powder and any internal surfaces. Degassing may be performed under vacuum and elevated temperature and serves to reduce residual pressure within the component during HIP, which could otherwise impair consolidation or result in internal porosity.

Degassing may be applied as a separate process step before sealing or may occur as part of a combined heat/vacuum/seal operation. The degassing protocol is tailored to the material system, surface condition, and the sensitivity of the HIP consolidation profile to residual gas.

### Temperature

Degassing temperature is generally selected as a fraction of the melting temperature (Tm) of the core powder material, where Tm is expressed in Kelvin. In some examples, the temperature is controlled to be high enough to drive off absorbed gases and activate surface diffusion, but low enough to avoid sintering or structural changes prior to HIP. Ranges may include:
0.0 Tm to 0.3 Tm: Used for low-temperature removal of physically adsorbed moisture and light volatiles. This range may be exhibited in less reactive materials.

0.3 Tm to 0.5 Tm: A moderate-temperature range that activates some chemisorbed species and may improve surface cleanliness. This range is often used for sensitive powder systems.

>0.5 Tm: High-temperature degassing may be used to remove deep-seated volatiles or promote pre-diffusion bonding but is carefully controlled to avoid pre-sintering or phase transformation of the core powder.

Degassing duration may be between 1 and 8 hours, depending on material, component size, and vacuum system capability.

### Pressure

Vacuum pressure during degassing is also an important parameter. Lower pressures enable the removal of tightly bound gas species and promote outgassing from fine porosity within the powder bed. Suitable ranges include:
10⁻¹ to 10⁻³ torr: Suitable for basic moisture and gas removal. Often used for nonreactive alloys.

10⁻³ to 10⁻⁶ torr: High vacuum range, which may be used for aerospace-grade powders, reactive metals, or where high final density and low residual gas content are required.

10⁻⁶ to 10⁻⁹ torr: Ultra-high vacuum degassing may be used for highly reactive or extremely purity-sensitive systems, such as refractory alloys or precision thruster components.

Vacuum quality directly influences final part cleanliness, porosity, and interfacial bonding. In many embodiments, degassing is performed with the shell connected to a vacuum port via a temporary stem or nozzle, which is subsequently sealed off after degassing is complete.

### SEALING THE FILLED SHELL

Following powder filling and any degassing, in some examples, the open shell is be hermetically sealed to prepare the assembly for hot isostatic pressing (HIP). The sealing process is important to prevent gas ingress or egress during HIP and to maintain internal pressure equilibrium during densification. In some examples, the chosen sealing technique ensures structural integrity under HIP conditions while preserving the composition, geometry, and functionality of the shell as a structural part of the final component.

Sealing may be accomplished by mechanical deformation (e.g., crimping), fusion welding, solid-state bonding, or combinations thereof. The selection of a sealing method depends on the shell material, wall thickness, fill configuration, HIP temperature and pressure, and the overall geometry of the assembly.

### Crimping the Filled Shell

Crimping is a mechanical sealing method in which a portion of the shell, which may be a tubular extension or fill stem, is plastically deformed to close off the powder-filled cavity. Crimping may serve as a temporary seal during degassing or may be used in conjunction with welding to establish a permanent seal. It is particularly useful for ductile shell materials and can be performed with simple tooling.

Room Temperature Crimping: This method is suitable for shell materials that exhibit sufficient ductility at ambient temperature. The fill tube or sealing flange is mechanically pinched or folded using dies or forming tools. Room temperature crimping minimizes thermal exposure but may introduce local stress concentrations if not properly controlled.

Elevated Temperature Crimping: In some cases, crimping is performed at elevated temperatures to reduce the yield strength of the shell material, allowing for tighter sealing without fracture. This method is advantageous for high-strength or low-ductility alloys, particularly those used in aerospace or refractory systems. Local heating may be applied using induction coils, resistance heaters, or torches.

Crimping may also be used to collapse sacrificial volumes within the shell to control powder movement during HIP or to provide a transition region for subsequent weld sealing.

### Welding the Filled Shell

Welding may be used to provide a hermetic and structurally robust seal after powder filling and optional crimping. In some examples, the weld joint is leak-tight, metallurgically sound, and capable of withstanding HIP temperatures and pressures without distortion or failure. The weld may also serve as a mechanical reinforcement of the crimped region.

### Welding techniques may include:

Tungsten Inert Gas (TIG) Welding: TIG welding provides precise, low-contamination fusion suitable for a wide range of alloys, including stainless steels, titanium, and superalloys. It may be used for sealing small or medium-diameter fill ports and enables tight control over weld bead shape and penetration. TIG welding may be performed manually or with automated orbital welding equipment.

Metal Inert Gas (MIG) Welding: MIG welding may be used for higher deposition rates or larger joint volumes. While less precise than TIG, it may be suitable for lower-performance shells or for non-critical sealing areas. Shielding gas selection (e.g., argon, helium, argon-hydrogen blends) is tailored to the alloy system.

Laser Welding: Laser welding offers high precision, low heat input, and excellent control for thin-walled shells or intricate geometries. It is especially useful for sealing refractory metals or reactive materials with minimal distortion. Pulsed or continuous-wave laser systems may be used depending on thickness and material.

Solid-State Welding: Solid-state welding techniques, such as friction stir welding (FSW) or diffusion bonding, may be employed when minimal thermal input or phase transformation is desired. These methods preserve base material microstructure and are particularly useful for joining dissimilar metals or when avoiding fusion zone defects is important. In some embodiments, the shell may be designed with interlocking mechanical features to facilitate solid-state joining.

DED Assisted Welding: Both powder-based and wire-based can be used for sealing while additionally allowing for in-situ alloying, gradient material transitions, and local reinforcement at the joint by varying feedstock composition in real time.

The final seal may be inspected using non-destructive techniques such as helium leak testing, X-ray or computed tomography (CT), dye penetrant testing, or ultrasonic inspection to verify hermeticity and structural integrity prior to HIP.

In some implementations, the fill port is fully removed after sealing, and the remaining surface is machined flush to match the component profile. In other cases, the seal region is retained and designed as a functional or sacrificial feature of the final component.

### HOT ISOSTATIC PRESSING (HIP) CONSOLIDATION

Hot isostatic pressing (HIP) is a key step in the manufacturing process, wherein the powder-filled and sealed shell is exposed to elevated temperature and isostatic gas pressure for a specified time. The HIP cycle densifies the core powder, eliminates internal porosity, and promotes diffusion bonding between the core and the shell. The shell serves as both a containment capsule and an active participant in the final structure, providing structural integrity during HIP and remaining as part of the finished component.

HIP enables full consolidation without directional shrinkage or the need for sintering atmospheres, making it highly effective for complex geometries, internal cavities, and multi-material systems.

### Hot Isostatic Pressing

HIP may beconducted in a high-pressure vessel filled with an inert gas, such as argon or nitrogen, which acts as the pressure medium. The process involves simultaneous application of heat and pressure, which causes the powder core to compact and densify via plastic deformation, creep, and diffusion. The process may also activate diffusion bonding between the core and the interior surface of the shell, forming a monolithic, metallurgically bonded interface.

The HIP parameters are tuned based on material system, desired final density, part size, and application-specific mechanical requirements. The cycle may be preceded by vacuum purging or inert backfilling, and completed with a natural or controlled cooling step.

### Setting HIP Final Preform Density

The initial powder fill may vary in bulk density based on powder morphology, fill method, and vibration or compaction during assembly. HIP serves to densify this preform to a final relative density approaching 100%. Preform density directly affects required HIP pressure and time.

80%-90% Preform Density: Reflects loosely packed powders or low tap-density morphologies. These require higher pressures and longer durations to achieve full densification.

90%-95% Preform Density: Reflects moderately packed powder fills using vibratory compaction or bimodal PSDs. Allows for efficient consolidation with moderate HIP parameters.

95%-100% Preform Density: Achievable through tightly packed spherical powders, pre-compacted green bodies, or pre-sintered inserts. These enable shorter HIP cycles and are often used when dimensional control is important.

The preform density may be determined via modeling, dry runs with tracer particles, or in-situ monitoring of fill procedures.

### Setting HIP Temperature

Temperature may be expressed as a fraction of the melting temperature (Tm) of the core alloy, in Kelvin. In some examples, it is high enough to activate diffusion and promote creep, but below the melting or phase transformation threshold for the material system.

0.3 Tm to 0.5 Tm: Used for systems requiring moderate densification, or where minimal grain growth is desired. May be used for reactive or temperature-sensitive powders.

0.5 Tm to 0.7 Tm: Standard range for full consolidation of many alloys. Balances densification rate with control of microstructural evolution.

0.7 Tm to 0.9 Tm: Used for challenging-to-densify powders, blended elemental systems, or where interfacial diffusion between core and shell is necessary. Also applicable to refractory metal systems and multi-material interfaces.

Temperature is maintained within tight tolerances (±10-15°C) to ensure uniformity across the component.

### Setting HIP Pressure

Pressure ensures uniform compaction and pore closure throughout the powder volume. It is applied isostatically, allowing consolidation in all directions without distortion of the outer shell.

< 5 ksi (34 MPa): May be insufficient for most metal powder systems unless pre-sintered or pre-compacted.

5 ksi < pressure < 10 ksi (34-69 MPa): Suitable for highly compressible powders or for low-density ceramic-metal blends.

10 ksi < pressure < 20 ksi (69-138 MPa): Range for aerospace and industrial alloy systems, enabling effective densification with minimal dimensional distortion.

20 ksi < pressure < 30 ksi (138-207 MPa): Used for refractory alloys, hard-to-densify blends, or applications requiring near-theoretical density.

> 30 ksi (207+ MPa): High-pressure HIP systems may be used for advanced composites, extremely fine powders, or site-specific applications requiring enhanced interfacial bonding.

### Setting HIP Time

The hold time at temperature and pressure is selected to ensure complete densification and to facilitate any required diffusion bonding at the shell-core interface. HIP time also affects grain growth, phase transformations, and residual stress.

< 1 hour: Short-cycle HIP may be used for near-full-density preforms or small components.

### 1-5 hours: Standard duration for most alloy systems with well-packed powder fill.

5-10 hours: Used for systems with low preform density, blended elemental compositions, or slow diffusion kinetics.

10-100 hours: Extended cycles may be required for refractory systems, high-viscosity matrices, or components with large thermal mass.

Time may also be increased to support phase homogenization or to promote bonding in hybrid or multi-layered materials.

### Cooling Methods After HIP

After completion of the hold cycle, the component is cooled under controlled conditions to avoid distortion, thermal shock, or unwanted phase transformations. Cooling approach is selected based on alloy system, shell geometry, and post-processing requirements.

Natural Cool: Passive cooling within the HIP vessel. Suitable for most metals and alloys with low residual stress sensitivity. Offers simplicity and cost-effectiveness.

Forced Convection Cool: Accelerated cooling using inert gas circulation or heat exchangers. Reduces cycle time and improves dimensional control. Often used for heat-sensitive or distortion-prone geometries.

In some embodiments, the cooling rate is actively controlled (e.g., ramped or staged) to influence microstructure, stress state, or to meet specification requirements for downstream thermal treatments.

### POST-CONSOLIDATION PROCESSING THE CONSOLIDATED COMPONENT

Following hot isostatic pressing (HIP), the consolidated component may undergo additional processing steps to achieve final geometry, surface finish, mechanical properties, or form factor. These post-consolidation operations may include heat treatment, net-shape machining, near-net-shape forming, or bulk thermomechanical processing (TMP). The specific combination of steps is tailored to the material system, intended application, and the geometric complexity of the component. Because the shell remains an integral structural portion of the finished component, all post-processing operations are performed with the shell in place.

### Heat Treating

Post-HIP heat treatment may be performed to refine the microstructure, relieve residual stresses, improve mechanical properties, or tailor phase distribution. The selected heat treatment schedule depends on the alloy chemistry, HIP conditions, and intended service environment. In multi-material systems, heat treatment may also be used to homogenize or stabilize the interface between the shell and core.

Ambient Air Furnace: Suitable for oxidation-resistant materials or for stress relief cycles that do not require an inert or reducing atmosphere. May be utilized for stainless steels, nickel-based alloys, or cobalt alloys.

Vacuum Furnace: Preferred for oxidation-sensitive materials such as titanium, refractory metals, or fine-grain powders. Vacuum processing minimizes surface contamination and is essential when maintaining a clean or reactive surface condition is important.

Other Environments: Inert gas (e.g., argon, helium), partial pressure, or reducing atmospheres (e.g., hydrogen) may be used for specific alloy systems. Controlled cooling or staged thermal ramps may be employed to avoid cracking, distortion, or phase segregation.

Heat treatment profiles may include solution annealing, aging, stress relief, or diffusion cycles, depending on the desired final microstructure.

### Net-Shape Processing

Net-shape processing refers to subtractive or additive operations used to bring the consolidated component to final dimensions and tolerances. Because the shell approximates the final geometry, minimal material removal may be required. The goal is to produce components that are ready for assembly or end-use without extensive secondary processing.

Final Machining: This may include turning, milling, drilling, or grinding to achieve precise tolerances, flatness, concentricity, or functional surfaces (e.g., sealing faces, threaded ports, mating interfaces). Machining is often focused on localized features rather than bulk stock removal.

Finishing Methods: Additional surface finishing may be performed to improve surface roughness, remove residual oxides, or enhance appearance or function. Finishing options may include:
Machine Milling: Applied for complex surface refinement or precise surface contouring.

Chemical Milling: Used to selectively remove surface layers or improve dimensional precision without mechanical stress.

Sand Blasting: Applied to remove oxides, smooth surfaces, or generate uniform texture.

Other: Techniques such as electropolishing, abrasive flow machining, or vibratory finishing may also be used, depending on component requirements.

### Near-Net-Shape (NNS) Processing

In some embodiments, the HIP-consolidated component may be processed further through deformation-based shaping operations. These near-net-shape (NNS) techniques allow for refinement of external geometry, enhancement of grain structure, or adaptation to mating assemblies.

Finish Forging: Applied to refine geometry and internal structure. May be performed at sub-HIP temperatures to preserve densification while introducing directional grain flow.

Creep Forming: Utilized for complex or contoured shapes, particularly in thin-walled or aerospace applications. Relies on time-dependent deformation under load.

Hot Forming: Thermally assisted pressing or shaping, often used to achieve compound curvature or to flatten surfaces for mounting or assembly.

Other: May include mandrel forming, superplastic forming, or local embossing of features.

These methods enable greater geometric flexibility without full-scale bulk forming.

### Bulk Forming and Thermomechanical Processing (TMP) for Wrought Product Form

For applications requiring wrought material properties (e.g., fatigue life, anisotropic strength), the consolidated component may be subjected to bulk deformation and TMP. These processes reshape the material while simultaneously modifying microstructure through strain hardening, recrystallization, and grain refinement.

Closed Die Forging: Enables near-net or net-shape component formation with tight dimensional tolerances and favorable fiber orientation.

Rotary Forging: Offers localized deformation and is well-suited for axisymmetric components such as shafts or rings.

Cogging: Applied to large billets to reduce cross-section and prepare material for subsequent forming steps.

Multi-Axis Compression: Used for complex shapes or isotropic mechanical properties, especially where directional loading is not uniform.

Other: May include extrusion, rolling, or radial forging, depending on the component design and required mechanical properties.

These processes are often paired with interim or final heat treatments to control strength, ductility, or grain structure.

The following figures illustrate selected stages of a specific embodiment of the disclosed method. While these figures depict particular steps, geometries, and arrangements for illustrative purposes, the invention is not limited to the specific details shown and may encompass a range of variations within the scope of the claims.

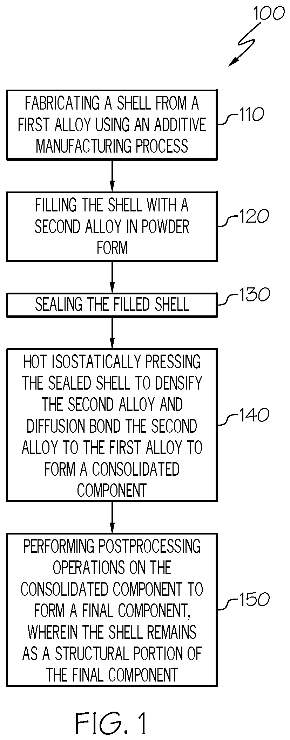

FIG. 1 illustrates an example method 100 for manufacturing a consolidated, multi-material component using an additive-manufacturing-based shell and powder-filled core, followed by hot isostatic pressing and post-processing. The process may be used to produce a structural component in which the outer shell remains an integral portion of the final part.

At Step 110, a shell is fabricated from a first alloy using an additive manufacturing process. The additive manufacturing process may include, for example, laser powder bed fusion (LPBF), directed energy deposition (DED), binder jetting, or other layerwise deposition techniques. The shell may define a near-net-shape external geometry and serve both as a structural element of the final part and as a containment vessel for subsequent powder consolidation. The shell may be formed from a metal or alloy selected for properties such as high-temperature strength, oxidation resistance, or creep resistance.

At Step 120, the shell is filled with a second alloy in powder form. The powder may be introduced through one or more fill ports or openings in the shell. The powder may be pre-alloyed or a blend of elemental powders, and may optionally include ceramic, intermetallic, or refractory particulate reinforcements. Filling may occur under ambient or inert gas conditions (e.g., argon), and may be assisted by vibration or tamping to increase packing density.

At Step 130, the filled shell is sealed to fully enclose the powder within. Sealing may be accomplished by mechanical crimping, welding (e.g., TIG, MIG, laser, or solid-state welding), or a combination thereof. The sealing operation may be preceded by a degassing step, in which the filled shell is exposed to vacuum and elevated temperature to remove entrapped gases or volatiles that could interfere with densification during HIP.

At Step 140, the sealed shell is subjected to hot isostatic pressing. During HIP, the component is exposed to elevated temperature and isostatic gas pressure for a selected time duration. The HIP cycle densifies the powder and causes diffusion bonding of the second alloy (core) to the inner surface of the first alloy (shell), forming a monolithic consolidated component. The specific HIP parameters-such as pressure, temperature, and time-are selected based on the materials used and the desired mechanical properties.

At Step 150, the consolidated component undergoes post-processing operations. These may include heat treatment (e.g., in vacuum or air), net-shape or near-net-shape machining, surface finishing, or thermomechanical processing such as forging or creep forming. Notably, the shell remains as a structural and functional portion of the final component. The post-processing operations refine the final geometry, surface finish, and material properties of the part, enabling it to meet application-specific requirements.

The method illustrated in FIG. 1 enables the creation of consolidated, multi-material components with high material utilization, reduced manufacturing complexity, and enhanced design flexibility. Because the shell remains in the final product, no removal or de-canning operation is required.

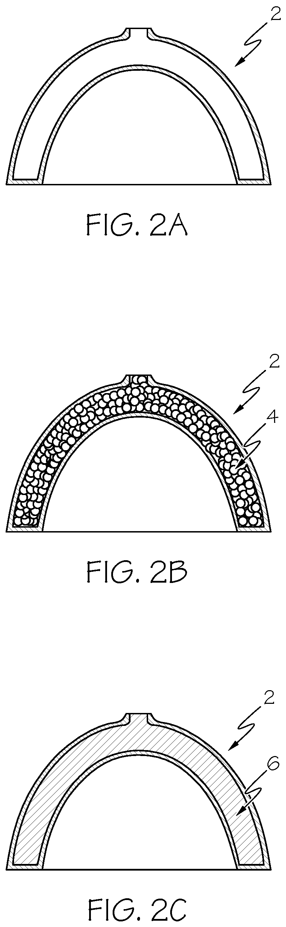

FIGS. 2A through 2C illustrate cross-sectional views of an example component at successive stages of the manufacturing process, progressing from shell fabrication to powder fill and final consolidation. The sequence corresponds to the method steps shown in FIG. 1 and demonstrates how the shell functions both as a HIP capsule and as a structural portion of the final component.

FIG. 2A shows a cross-sectional view of a shell 2 fabricated from a first alloy using an additive manufacturing process. The shell 2 may be produced using laser powder bed fusion (LPBF), directed energy deposition (DED), or other AM methods. The shell 2 defines a closed or semi-closed cavity with an outer wall configured to remain as a structural portion of the final component. The inner cavity is shaped to receive a powder fill and is optionally provided with one or more fill ports. The shell geometry may be tailored to near-net-shape external contours to reduce or eliminate post-HIP machining. In some embodiments, the inner surface of the shell 2 may include a barrier or compatibility coating to control interdiffusion or enhance bonding during HIP.

FIG. 2B illustrates the shell 2 of FIG. 2A after being filled with a second alloy in the form of powder 4. The powder 4 may include pre-alloyed or blended elemental powders, optionally including particulate reinforcements such as oxides, nitrides, borides, or carbides. The powder 4 is deposited into the shell 2 through a fill port or open end, using gravity feed, vibration, or tamping to achieve uniform packing. The illustrated cross-section shows the powder 4 distributed along the interior of the shell 2. In some embodiments, the powder 4 may have a bimodal or engineered particle size distribution to improve fill density and minimize porosity prior to consolidation.

FIG. 2C depicts the component following hot isostatic pressing (HIP). Under elevated temperature and isostatic gas pressure, the powder has been fully densified into the form of a solid core 6 and diffusion bonded to the inner surface of the shell 2, forming a monolithic, consolidated component. The shell 2 remains in place as a structural and functional portion of the final part. The interface between the shell 2 and the core 6 is continuous and metallurgically bonded, and no further encapsulation or de-canning is required. The final component may undergo additional post-processing, such as machining or heat treatment, as described with reference to FIG. 1.

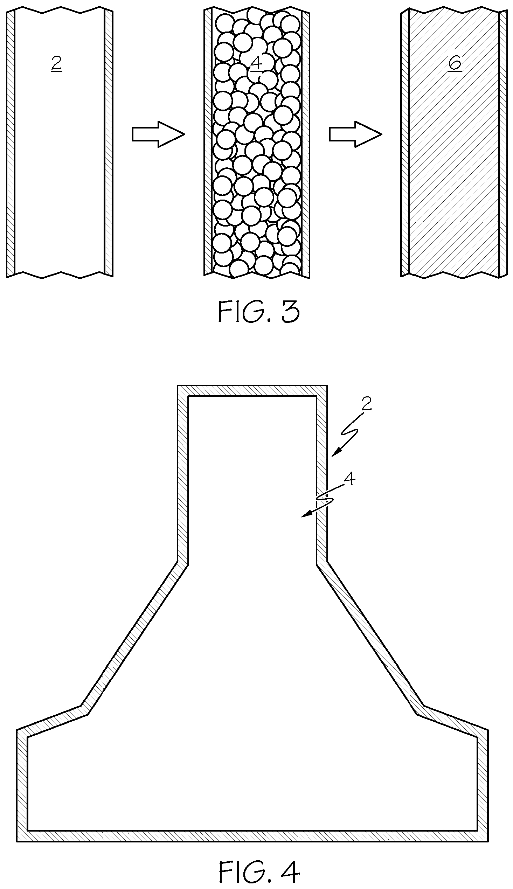

FIG. 3 is a schematic cross-sectional view of an example component after additive manufacturing of the shell, after filling the shell with powder, and after hot isostatic pressing. The component includes a shell 2 formed from a first alloy, which defines the outer geometry and serves as a structural portion of the final component. The shell is initially filled with powder material 4 comprising a second alloy, which occupies the internal cavity of the shell. During the process, although not explicitly shown in the figure, the shell is sealed to enclose the powder-which may occur through crimping and/or welding. Following hot isostatic pressing, the powder is fully consolidated into a solid core 6 that is diffusion bonded to the interior of the shell, resulting in a fully integrated, multi-material structure.

FIG. 4 is a schematic cross-sectional view of an example consolidated component having a complex geometry. The component includes a shell 2 formed from a first alloy, which defines the external shape and remains as a structural portion of the final component. The interior region of the shell is filled with a solid core 4 that originated as a powder and was subsequently consolidated through hot isostatic pressing. The illustrated geometry demonstrates that the disclosed method is well-suited for manufacturing components with non-uniform profiles or intricate shapes, such as propulsion nozzles, housings, or transition structures.

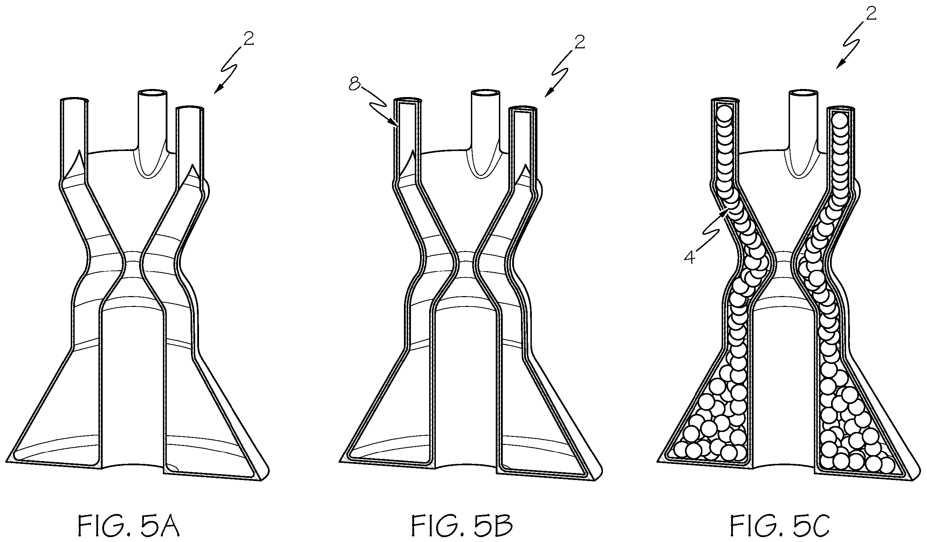

FIGS. 5A to 5H illustrate cross-sectional views of a high-performance spacecraft demonstration thruster manufactured using the disclosed method (serving as another example). The sequence of figures corresponds to successive stages in the process flow, beginning with the design and fabrication of an additively manufactured shell, followed by powder filling, degassing, sealing, hot isostatic pressing, and final machining to produce a consolidated component. Each stage is representative of a practical implementation of the method and is applicable to a wide range of high-performance components.

FIG. 5A shows a cross-sectional view of a shell 2 that has been designed, modeled, analyzed, and fabricated using an additive manufacturing process such as laser powder bed fusion (LPBF). The shell geometry reflects the near-net-shape design of the final component and includes an internal cavity intended to be filled with a core powder material. The shell may be fabricated from a high-temperature or oxidation-resistant alloy, and the geometry may incorporate functional features such as ports or interfaces for subsequent processing.

FIG. 5B depicts the shell 2 after the application of an internal barrier coating 8 via chemical vapor deposition (CVD). The coating, which may include materials such as iridium or a refractory oxide, serves to inhibit interdiffusion between the shell and the core during hot isostatic pressing and to preserve the integrity of dissimilar material interfaces. This step is particularly useful when the core and shell are composed of chemically distinct alloys or when precise phase control is required across the bonded interface.

FIG. 5C illustrates the shell 2 after it has been filled with a core material in the form of a powder 4. The powder may be introduced under an inert gas environment to avoid oxidation or contamination and may include spherical, pre-alloyed particles selected for targeted mechanical or thermal performance. Vibration or tamping techniques may be used to maximize packing density and promote uniform fill throughout the shell's internal cavity.

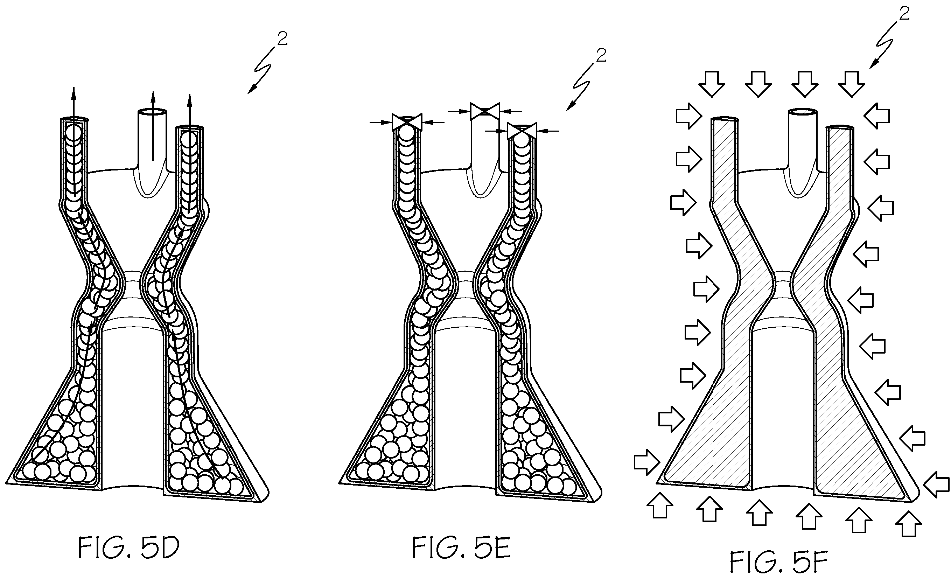

FIG. 5D shows the component undergoing a warm vacuum degassing process. In this stage, the filled shell 2 is subjected to elevated temperature under high vacuum conditions to remove adsorbed gases, moisture, and residual volatiles from the powder 4. Degassing helps ensure that trapped gases do not interfere with densification during hot isostatic pressing, and reduces the risk of internal porosity or interface contamination.

FIG. 5E depicts the filled and degassed shell 2 after being hermetically sealed. Sealing may be achieved through a combination of mechanical crimping and fusion welding, such as tungsten inert gas (TIG) welding, depending on the material and geometry. The sealed shell is designed to withstand the pressures and temperatures of the HIP process while maintaining the internal vacuum or inert environment established during degassing.

FIG. 5F illustrates the component 10 after consolidation via hot isostatic pressing. During HIP, the shell 2 and core 6 are exposed to elevated temperature and isostatic gas pressure, resulting in full densification of the core powder and diffusion bonding at the shell-core interface. The result is a monolithic, structurally integrated component with no internal voids or bonding seams. The shell 2 remains as a functional and structural part of the final component.

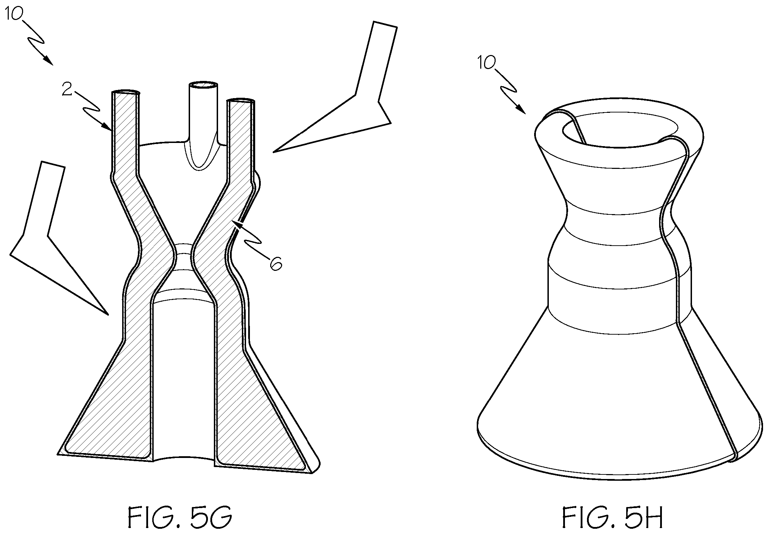

FIG. 5G shows the consolidated component 10 following final machining. Post-HIP machining operations may include trimming, surface finishing, or precise dimensioning to meet functional requirements. The component 10 may also undergo heat treatment or other post-processing as needed to enhance microstructure or mechanical properties. The shell's geometry and composition remain integral to the part, supporting performance in service.

FIG. 5H presents a final cross-sectional view of the completed component. The image illustrates the successful integration of the additively manufactured shell and the consolidated powder core into a single, multi-material structure. The cross-section highlights the preservation of complex geometries and internal features made possible through the disclosed manufacturing method, as well as the continuity and bonding at the shell-core interface.

### EXAMPLE

In one illustrative embodiment, the disclosed method may be applied to the fabrication of a thruster component designed for high-temperature propulsion service. The component can include a structural shell and a powder-filled core, consolidated via hot isostatic pressing.

The shell may be formed from a platinum-10 weight percent rhodium alloy and is fabricated using a laser powder bed fusion (LPBF) additive manufacturing process. The shell feedstock can include spherical powder with a particle size distribution between 15 and 63 micrometers. Following fabrication, the shell may be heat treated and an iridium-based barrier coating may be applied to the interior surface using chemical vapor deposition (CVD).

The core material may include a powder alloy comprising niobium with 10 weight percent tungsten and 2.5 weight percent zirconium. The core powder may be spherical, with a particle size distribution between 15 and 63 micrometers. The shell may be filled with the core powder under an argon environment using a vibratory table to improve packing density.

The filled shell may then be vacuum degassed at a temperature of approximately 0.3 times the melting point of the core alloy for four hours at a pressure of approximately 10⁻⁶ torr. After degassing, the shell may be mechanically crimped at room temperature and hermetically sealed using tungsten inert gas (TIG) welding.

The sealed assembly may be subjected to hot isostatic pressing at a temperature of approximately 1500°C, a pressure of 20 ksi, and a dwell time of three hours. During HIP, the core powder densifies and diffusion bonds to the shell, forming a monolithic structure.

Following HIP, the component may undergo post-consolidation processing, including heat treatment and final machining to engineering drawing tolerances. The resulting thruster component retains the shell as a structural and functional portion of the final part, capable of withstanding the thermal and mechanical demands of the intended propulsion environment.

Although various embodiments of the disclosed methods have been shown and described, modifications may occur to those skilled in the art upon reading the specification. The present application includes such modifications and is limited only by the scope of the claims.

Example 1. A method for manufacturing a component, the method comprising: fabricating a shell from a first alloy using an additive manufacturing process; filling the shell with a second alloy in powder form; sealing the filled shell to yield a sealed shell; and hot isostatically pressing the sealed shell to densify the second alloy and diffusion bond the second alloy to the first alloy to form a consolidated component, wherein the shell remains as a structural portion of the consolidated component.

Example 2. The method of Example 1, further comprising pre-processing the second alloy by powder mixing, mechanical milling, or ultrasonic particulate coating.

Example 3. The method of Example 2, wherein the mechanical milling is selected from tumbler ball milling, vibratory ball milling, attrition milling, or rod milling.

Example 4. The method of any one of Examples 1 to 3, wherein the filling the shell with the second alloy is performed under an inert gas atmosphere.

Example 5. The method of any one of Examples 1 to 4, wherein the sealing the filled shell comprises mechanical crimping, welding, or both.

Example 6. The method of Example 5, wherein the welding is selected from tungsten inert gas welding, laser welding, or solid-state welding.

Example 7. The method of any one of Examples 1 to 6, wherein the hot isostatic pressing is conducted at a pressure between 10 ksi and 30 ksi and a temperature between 0.5 Tm and 0.9 Tm.

Example 8. The method of Example 7, wherein the hot isostatic pressing duration is between 1 hour and 100 hours.

Example 9. The method of any one of Examples 1 to 8, wherein the consolidated component is cooled by natural convection or forced convection cooling.

Example 10. The method of any one of Examples 1 to 9, further comprising performing post-processing on the consolidated component to form a final component.

Example 11. The method of Example 10, wherein the post-processing comprises heat treating, net-shape machining, near-net-shape forming, or bulk forming.

Example 12. The method of Example 11, wherein the post-processing further comprises thermo-mechanical processing selected from closed die forging, rotary forging, cogging, or multi-axis compression.

Example 13. A method for manufacturing a component, the method comprising: fabricating a shell from a first alloy using a powder bed fusion additive manufacturing process; applying a barrier coating to an interior surface of the shell; filling the shell with a second alloy in powder form; sealing the filled shell; hot isostatically pressing the filled shell after sealing to densify the second alloy in powder form and diffusion bond the second alloy to the first alloy to form a consolidated component; and performing post-processing on the consolidated component to form a final component, wherein the shell remains as a structural portion of the final component.

Example 14. The method of Example 13, wherein the first alloy comprises platinum and rhodium.

Example 15. The method of Example 14, wherein the first alloy comprises platinum with 10 weight percent rhodium.

Example 16. The method of any one of Examples 13 to 15, wherein the second alloy comprises niobium, tungsten, and zirconium.

Example 17. The method of Example 16, wherein the second alloy comprises niobium with 10 weight percent tungsten and 2.5 weight percent zirconium.

Example 18. The method of any one of Examples 13 to 17, wherein the barrier coating comprises iridium.

Example 19. The method of any one of Examples 13 to 18, wherein the barrier coating is applied by chemical vapor deposition.

Example 20. The method of any one of Examples 13 to 19, wherein the shell and the second alloy both comprise powder having a spherical particle morphology with a particle size distribution between 15 micrometers and 63 micrometers.

Example 21. The method of any one of Examples 13 to 20, wherein the shell is filled with the second alloy in an argon environment and compacted using a vibratory table.

Example 22. The method of any one of Examples 13 to 21, further comprising vacuum degassing the filled shell prior to sealing, at a temperature corresponding to approximately 0.3 Tm and a pressure of approximately 10⁻⁶ torr.

Example 23. The method of any one of Examples 13 to 22, wherein the sealing comprises crimping and tungsten inert gas welding.

Example 24. The method of any one of Examples 12 to 23, wherein the hot isostatic pressing is performed at approximately 1500°C, 20 ksi, and for a duration of approximately three hours.

Example 25. The method of any one of Examples 13 to 24, wherein the post-processing comprises heat treatment and final machining to engineering drawing tolerances.

Example 26. The method of any one of Examples 13 to 25, wherein the component is a thruster component.

## Claims

1. A method for manufacturing a component, the method comprising:
fabricating a shell from a first alloy using an additive manufacturing process;
filling the shell with a second alloy in powder form;
sealing the filled shell to yield a sealed shell; and
hot isostatically pressing the sealed shell to densify the second alloy and diffusion bond the second alloy to the first alloy to form a consolidated component,
wherein the shell remains as a structural portion of the consolidated component.

2. The method of Claim 1, wherein the second alloy comprises a composition different from the first alloy.

3. The method of any of Claims 1 or 2, wherein at least one of the first alloy or the second alloy includes enhancement particulates selected from the group consisting of oxides, nitrides, borides, carbides, and combinations thereof.

4. The method of Claim 3, wherein the enhancement particulates comprise at least one of yttria, alumina, zirconia, hafnia, titanium nitride, boron nitride, titanium diboride, zirconium diboride, titanium carbide, zirconium carbide, or silicon carbide.

5. The method of any one of Claims 1 to 4, wherein the first alloy is in a form of a pre-alloyed powder, a blended elemental powder, or a metal wire.

6. The method of any one of Claims 1 to 5, wherein the additive manufacturing process comprises one or more of: binder jetting, directed energy deposition, fused filament fabrication, powder bed fusion, friction stir deposition, or cold spray.

7. The method of Claim 6, wherein the powder bed fusion comprises laser powder bed fusion or electron beam powder bed fusion.

8. The method of any one of Claims 1 to 7, further comprising heat treating the shell after fabrication.

9. The method of any one of Claims 1 to 8, further comprising applying a coating to an inner surface of the shell selected from a barrier coating or a compatibility coating.

10. The method of Claim 9, wherein the coating is applied by chemical vapor deposition, physical vapor deposition, or slurry coating.

11. The method of any one of Claims 1 to 10, wherein the second alloy comprises spherical, granular, fine, or flake morphology.

12. The method of any one of Claims 1 to 11, further comprising pre-processing the second alloy by powder mixing, mechanical milling, or ultrasonic particulate coating.

13. The method of any one of Claims 1 to 12, wherein the second alloy in powder form is classified by particle size distribution within a range of less than 10 micrometers to 1000 micrometers.

14. The method of any one of Claims 1 to 13, further comprising degassing the filled shell prior to sealing, at a temperature between 0.3 Tm and 0.5 Tm and a pressure between 10⁻⁶ torr and 10⁻⁹ torr.

15. The method of any one of Claims 1 to 14, further comprising performing post-processing on the consolidated component to form a final component.
